# EUROPEAN PATENT APPLICATION

(11) **EP 4 424 500 A2**
(43) Date of publication of application: **04.09.2024**
(21) Application number: 23219534.7
(22) Date of filing: 21.12.2023
(51) Int. Cl.: B29C 65/22, B29C 65/30, B29C 65/00

(54) **HEAT-SEAL BAND WITH SEPARATE ELECTRICAL PATHS FOR VOLTAGE SENSING AND CURRENT LOAD TRANSMISSION**

(30) Priority: 02.03.2023 US 202363449432 P; 20.12.2023 US 202318390787
(71) Applicant: Force Global - ROPEX America LLC, Germantown, Wisconsin 53022 (US)
(72) Inventor: Parkinson, Michael, Hubertus, WI 53033 (US)
(74) Representative: Hedges, Martin Nicholas

(57) **Abstract**

A heat-seal band is provided that incorporates voltage sensing wires, such as signal wires or conductors that are separate from current load carrying wires or conductors. This provides two discrete electrical paths: a voltage sensing path, and a current transmission path. The voltage signal conductor(s) in the voltage sensing path may be insulated to mitigate any non-desired influence by means of the voltage signal conductor's exposure to thermal or electrical influences from the current transmission path, including current transmission paths defined through conductive tabs that connect the heat-seal band to the current load conductors. The voltage signal conductor may connect at a node to the tab to band (tab/band) junction, which is defined at an intersection of the heat-seal band's conductive tab and the band that directs heat into a workpiece. Additional or a second set of voltage sensing conductors may be electrically connected to the heat-seal band at a location that is spaced from or in a subset of the first set of voltage sensing conductors. The second set of voltage sensing conductors may provide a secondary voltage sensing arrangement as a verification tool for evaluating temperature discrepancies between their locations and those of the first set, indicative of heating non-uniformity about the heat-seal band.

## Description

### CROSS REFERENCE TO RELATED APPLICATION

This application claims the benefit of US provisional application 63/449,432 filed March 2, 2023 and hereby incorporated by reference.

### FIELD OF THE INVENTION

The invention relates generally to heat-sealing and, in particular, to a heat-seal band with separate electrical paths for voltage detection and current load transmission.

### BACKGROUND OF THE INVENTION

In heat-sealing or welding of thermoplastic materials, achieving uniform heat distribution about a contoured heat-seal surface can be challenging. This is especially true for heat-sealing procedures that implement closed-perimeter or closed-contour heat-seal bands due to their control complexity compared to relatively straight forward control methodologies for open contour heat-seal bands, such as bar-type or straight bands.

Control methodologies for some closed-contour heat-seal bands, such as those implemented in impulse heat-sealing procedures, involve heat-sealing procedures that can require cyclic heating and cooling phases. This can include allowing the heat-seal or weld to cool while the workpiece's components are held under pressure. During the heating phase(s), monitoring temperatures and adjusting energy application is important for producing acceptable heat-seals or welds. Different workpiece components can have different thermal characteristics, yet each procedure will have a particular target temperature and target application time and pressure.

Although the temperature of the workpiece itself is an important consideration, measuring its temperature or that of the band of the heat-seal band is challenging. The temperatures required for heat-sealing procedures are substantially high, and space within heat-sealing machines can be constrained. Efforts have been made to avoid incorporating prohibitively expensive high-temperature probes by instead deriving temperatures based on measuring values of other characteristics in the system. One method is calculating temperatures and changes in temperatures as a function of resistance values. One example of that method relies on Ohm's law and uses changes in resistance values to derive temperature-related values. Since it is difficult to measure changes in resistance values, efforts have been made to better calculate such values. In one example, current is measured going to the heat-seal-band, such as at a current transformer. Voltage is measured at the source, such as the bus block that delivers power to the heat-seal-band. A change in resistance value is calculated from these values and is based on a known temperature coefficient of the heat-seal band, and the temperature and/or temperatures change can be calculated as a function of the change in resistance.

Although such calculations provide temperature values, certain result anomalies can be experienced that relate to the configurations of the heat-seal band and interacting system components. Notably, the calculations are based on sensed values of the overall heat-seal band. However, since heat-seal bands have multiple components or segments the overall system characteristics are related at least generally to a compilation of the those of the underlying components or segments. Since various energy transmission-related characteristics of the heat-seal band's components or segments may differ at any given time, an apparent constant average value may be based on vastly different underlying constituent values that contribute to the average or overall value. In one example, over a period of time in which the calculated temperature of the band appears to be uniform or constant, the band itself may experience momentary time segments of localized cooling at the same time that the conductive bands may experience heating. Anomalous interpretations of uniform heating states of the band when not all of the calculated heat is being realized through emission at the band can lead to undesirable performance characteristics of the heat-seal or weld.

Managing these various challenges to try to maintain suitable uniformity of heat distribution about heat-sealed surfaces has proven difficult.

### SUMMARY OF THE INVENTION

In accordance with a first aspect of the invention, a heat-seal band is provided that facilitates uniform heating by enhancing the accuracy of temperature calculations and corresponding controls.

In accordance with another aspect of the invention, the control system monitors heat-seal band resistance values in a resistance active zone only, excluding values that correspond to a conductive tab so as to remove the conductive tab characteristics from the calculation.

In accordance with another aspect of the invention, a heat-seal band is configured to provide separate electrical paths for voltage sensing and load current transmission. This may be implemented with a current delivery wire(s) and a voltage sensing wire(s). In one example, power wires and voltage measurement wires may be independently connected to the heat-seal band.

In accordance with another aspect of the invention, the voltage sensing electrical path may directly connect a control system to the heat-seal band, without any intervening electrical connection to a heat-sealing tool that holds the heat-seal band. The voltage may be sensed at or adjacent to the band or contour itself, instead of at a different location on the heat-seal band that is further from the band or contour.

In accordance with another aspect of the invention, the voltage may be sensed at more than one location relative to the band. A first set of voltage sensing conductors may be arranged to sense voltage at or adjacent to the band, such as adjacent to conductive tabs that connect the heat-seal band to current load conductors. A second set of voltage sensing conductors may be arranged adjacent to each other and spaced from the first set. The second set of voltage sensing conductors may be directly connected to the band, which may facilitate localized voltage sensing and corresponding localized temperature calculations.

In accordance with another aspect of the invention, the voltage sensing electrical path may be electrically insulated from the heat-sealing tool that holds the heat-seal band.

In accordance with another aspect of the invention, the first electrical path may be a current load transmitting path defined at least in part by a conductive tab that is held by and electrically communicates with the heat-sealing tool. Conductors such as current load lines may connect a power source of a control system to the heat-sealing tool. The heat-sealing tool may include a bus bar assembly defined by two bus blocks or bus bars that connect to and are substantially mirror images of each other. The bus bars may be configured to sandwich the heat-seal band's conductive tabs between them, providing at least part of the second electrical path for current load transmission. A first bus bar may provide a first conductive surface that engages and electrically connects to a first conductive tab of the heat-seal band. A second bus bar may provide a second conductive surface that engages and electrically connects to a second conductive tab of the heat-seal band.

In accordance with another aspect of the invention, the second electrical path may be a voltage sensing electrical path that is defined at least in part by a voltage measurement tab, wire, and/or other conductor that provides signal wire-type transmission of voltage related information.

In accordance with another aspect of the invention, voltage sensing conductors such as voltage measurement wires are arranged outside of the load current path but at the junction where the power or conductive tabs meet the heat-seal band contour. This reduces thermal influences that would otherwise alter the resistance of the voltage measurement path, when compared to measuring voltage at terminals that connect current load lines to the heat-sealing tool.

In accordance with another aspect of the invention, instead of using a common terminal for current and voltage; the heat-seal band's current tab or conductor tab is connected to the common terminal, and the voltage measurement tab or voltage sensing conductor is connected to an independent contact. This reduces the influence of heat caused by the flow of energy through the conductor tabs and the corresponding effects of conducted heat and total residual heat.

In accordance with another aspect of the invention, a portion of each conductive tab of the heat-seal band is defined within both the voltage sensing and load current transmission paths. Each tab may define two electrical paths to the band or contour. A first path through the tab provides power to the band or contour, for example, by way of a heat-sealing tool's bus bar assembly. A second path through the tab is insulated and thermally isolated from the first power transmitting path.

In accordance with another aspect of the invention, accuracy of voltage measurement and uniformity of energy transfer characteristics may be enhanced by assembling the heat-sealing band with substantially consistent joint and dimensional characteristics. The heat-seal band may be assembled from a contour or band and a pair of conductive tabs that engage the band at a tab/band junction, which may include a node from which the voltage sensing conductor extends. The conductive tabs and the band may interconnect by way of cooperating features, such as pins and pockets or other corresponding protuberances and receptacles that locate the tabs in a predefined location and orientation relative to the band.

In accordance with another aspect of the invention, the arrangement of the pins and pockets of the tabs and band may facilitate a fit-up procedure during assembly of the heat-seal band. Joinder of the tabs and band at the tab/band junction may be done by way of an autogenous welding procedure that does not require filler material, such as various laser-welding processes that can weld the parent material(s) alone.

These and other features and aspects of the present invention will be better appreciated and understood when considered in conjunction with the following description and the accompanying drawings. It should be understood, however, that the following description, while indicating preferred embodiments of the present invention, is given by way of illustration and not of limitation. Many changes and modifications may be made within the scope of the present invention without departing from the scope of the invention.

### BRIEF DESCRIPTION OF THE DRAWINGS

FIG. 1 is a schematic representation of an impulse heat-seal system incorporating a heat-seal band with separate electrical paths for voltage sensing and current load transmission in accordance with various aspects of the invention;
FIG. 2 is a partially exploded isometric view of a heat-seal tool implementing a heat-seal band in accordance with various aspects of the invention;
FIG. 3 is a partially exploded isometric view of the heat-seal band of FIG. 2;
FIG. 4 is a front elevation view of the heat-seal band of FIG. 2;
FIG. 5 is a close-up front elevation view of a portion of the heat-seal band of FIG. 2;
FIG. 6 is another partially exploded isometric view of the heat-seal tool of FIG. 2;
FIG. 7 is a close-up exploded isometric view of a portion of the heat-seal band of FIG. 2;
FIG. 8 is a partially exploded view of another heat-seal band in accordance with various aspects of the invention; and
FIG. 9 is an exploded view of another heat-seal band in accordance with various aspects of the invention.

Before the embodiments of the invention are explained in detail, it is to be understood that the invention is not limited in its application to the details of construction and the arrangement of the components set forth in the following description or illustrated in the drawings. The invention is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION OF THE PREFERRED EMBODIMENTS

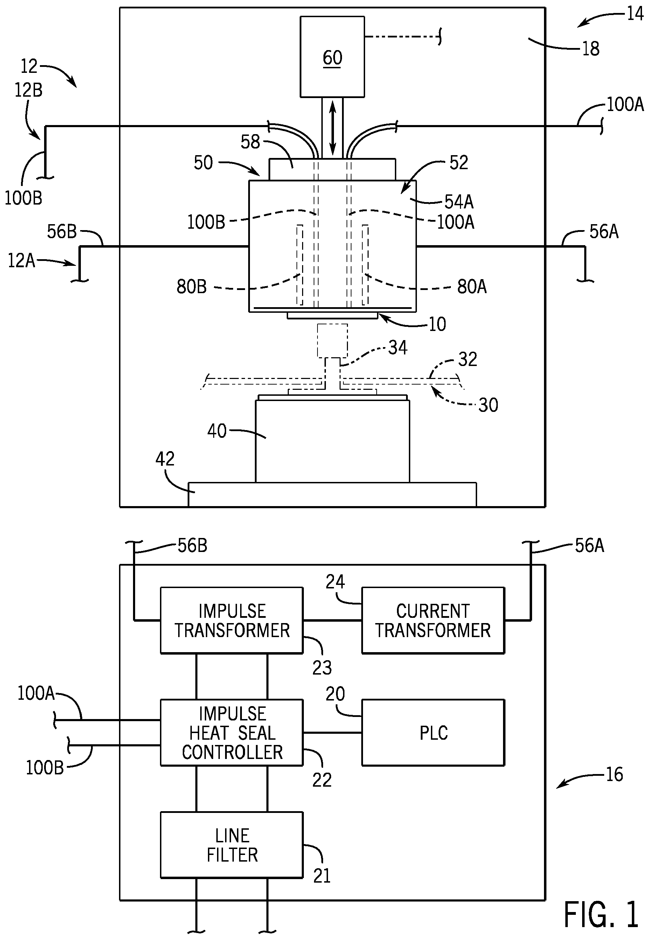

Referring now to the drawings and initially to FIG. 1, a heat-seal band 10 is provided with a multi-electrical-path arrangement 12 that is configured with separate electrical paths for current load transmission and voltage sensing. The multi-electrical-path arrangement 12 includes a first electrical path as a current load transmitting path 12A and a second electrical path as a voltage sensing path 12B that connect and extend through different segments of the heat-seal band 10, which is shown being used with a thermal joining or welding system to perform the heat-sealing operation, represented here as an impulse heat-seal system 14. Impulse heat-seal system 14 includes a control system 16 and a heat-seal machine 18. Control system 16 includes a controller 20 that is typically implemented as a PLC (programmable logic controller), a microcontroller, or some other computer that executes various stored programs while receiving inputs from and sending commands to the subsystems of components of the impulse heat-seal system 14. Control system 16 includes various power source systems and components, such as a line filter 21, an impulse heat-seal controller 22, an impulse transformer 23, and a current transformer 24 for delivering electrical power to various components of the impulse heat-seal system 14.

Still referring to FIG. 1, heat-seal machine 18 is configured to perform a thermal joinder procedure such as heat-sealing or welding on a workpiece 30, which typically includes multiple workpiece components. Workpiece 30 is shown here with a sheet-like substrate 32 that may, for example, be a segment of a bag or other polymeric or foil enclosure. A discrete component, shown as a fitting 34 that is represented here as having a port-like configuration, is being joined to the substrate 32 of workpiece 30 in this example. Workpiece 30 is shown to be supported from below by a counter-tool 40 that is connected to a counter holder or plate 42, which is supported by a frame of the heat-seal machine 18.

Still referring to FIG. 1, heat-seal machine 18 includes an impulse heat-sealing tool 50 that holds the heat-seal band 10 by clamping it in a bus bar assembly 52 that typically includes a pair of substantially mirror-image bus bars 54A, 54B, only one which is visible in this view. The current load transmitting path 12A electrically connects the heat-seal band 10 to a power source of the control system 16 by way of load lines or current load conductors 56A, 56B that extend from the control system 16 to terminals on the bus bars 54A, 54B. Accordingly, heat-seal band 10 receives and transmits electrical current for its heating by way of the current load transmitting path 12A, including the bus bars 54A, 54B and current load conductors 56A, 56B.

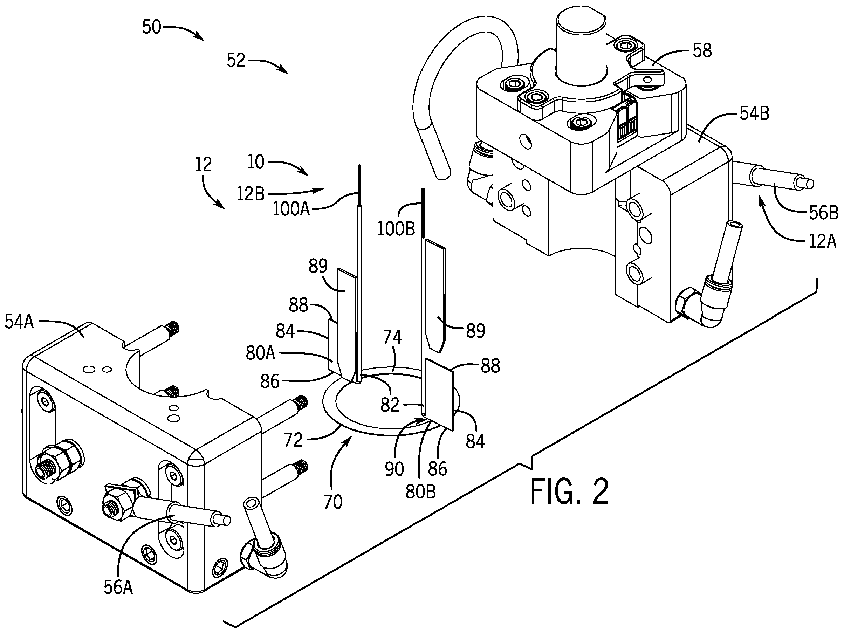

Still referring to FIG. 1, toward the top of the impulse heat-sealing tool 50, an insulated tie plate 58 connects the bus bar assembly 52 halves or bus bars 54A, 54B (FIG. 2) to each other. An actuator 60 connects to a mount of the tie plate 58 and drives the heat-sealing tool 50 into reciprocation between a released or extended potion (shown), in which the workpiece's 30 components can be arranged before their heat-sealing; and an engaged or extended position (not shown), in which the heat-sealing tool 50 is moved downwardly to apply pressure and heat from the heat-seal band 10 to the workpiece 30 to perform the heat-sealing procedure. Typically, during the heat-sealing procedure, the heat-sealing tool 50 holds the workpiece 30 under pressure against the counter-tool 40 and allows the weldment to cool under pressure to form the weld or heat-seal.

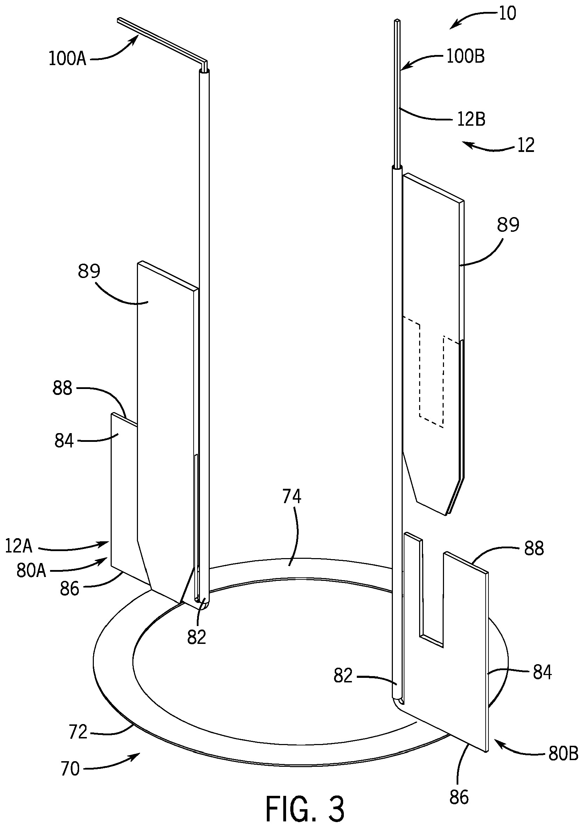

Referring now to FIG. 2, the heat-seal band 10 includes a band 70, shown here with a circular or ring-shaped closed-perimeter or closed-contour configuration. Band 70 has a lower or workpiece-facing surface 72 that is configured to direct heat toward the workpiece 30 (FIG. 3) to perform the heat-sealing operation. An opposite upper or tab-facing surface 74 faces upwardly toward the bus bar assembly 52.

Still referring to FIG. 2, heat-seal band 10 further includes a conductive tab arrangement, shown here as a pair of conductive tabs 80A, 80B, which are defined within the current load transmitting path 12A. The tabs 80A, 80B are generally planar structures that are parallel to and coplanar with each other, extending perpendicularly upward from the band's tab-facing surface 74. In this implementation, each tab 80A, 80B has a generally rectangular perimeter shape and is taller than it is wide. Tabs 80A, 80B are shown here as being wider than the material spanning between the band's ID (inside diameter) and OD (outside diameter), with lateral upright inner and outer side edges 82, 84 of the tabs 80A, 80B arranged inwardly and outwardly beyond respective inner and outer circumferential edges of the band. A bottom edge 86 is arranged toward the band 70, sitting against the tab-facing surface 74, defining a tab to band (tab/band) junction 90. An upper edge 88 is arranged opposite the band 70, away from the tab/band junction 90. A tab cover 89 may selectively overlie tab 80A, 80B, for example, to influence characteristics of energy transfer through the tab/band junction 90.

Referring now to FIG. 3, the voltage sensing path 12B provides signal transmission for monitoring the voltage across the band 70 by way of, for example, a voltage measurement or sensing tab, wire, and/or other conductor that provides signal wire-type transmission of voltage related information, shown here as voltage sensing conductors 100A, 100B. Voltage sensing conductors 100A, 100B are shown here arranged inboard or inwardly with respect to the band 70. However, it is understood that the voltage measurement or sensing tabs or conductors 100A, 100B can be arranged in different positions, for example, on the outside or outwardly of band 70. The particular arrangement of voltage sensing conductors 100A, 100B may be based on, for example, structural characteristics or configurations of cooperating components, such as aspects of tool 50 that facilitate acceptable routing of the voltage sensing conductors 100A, 100B.

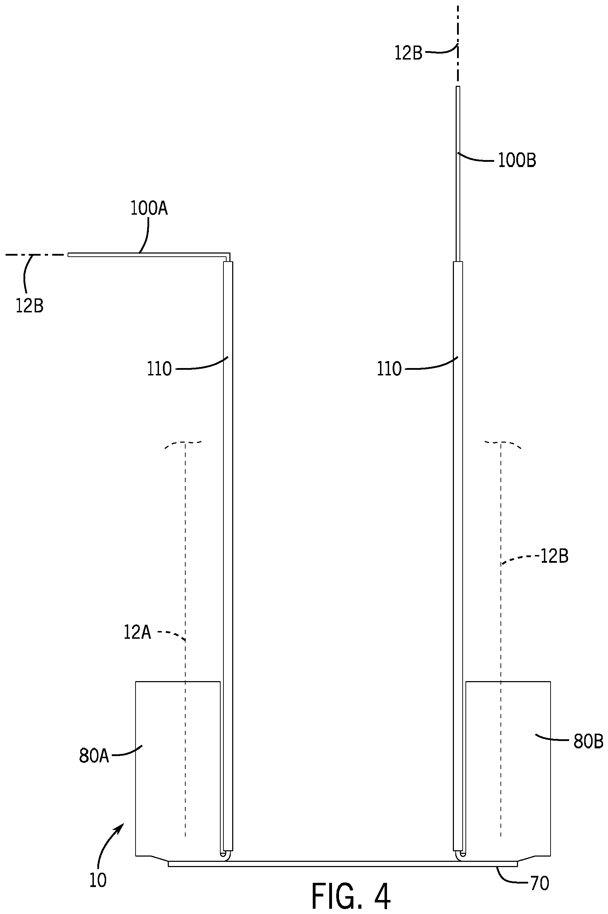

Referring now to FIG. 4, the current load transmitting path 12A extends through the entire length of each of tabs 80A and 80B. The current load transmitting path 12A is arranged outwardly of the voltage sensing path 12B. Voltage sensing path 12B extends through the voltage sensing conductors 100A, 100B, inwardly of the current load transmitting path 12A. Each of the voltage sensing conductors 100A, 100B is shown here with an insulated sleeve 110. Sleeve 110 is made from, for example, a polymeric, elastomeric, or other material that electrically and thermally insulates the voltage sensing conductors 100A, 100B from the current load transmitting path 12A and various other components of the impulse heat-seal system 14 (FIG. 1).

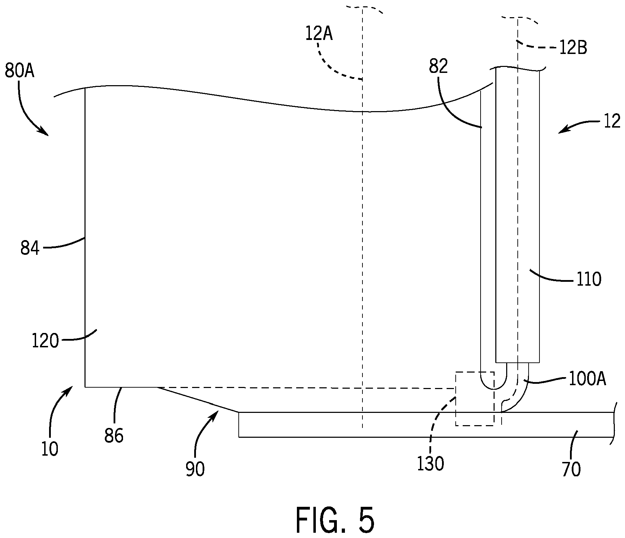

Referring now to FIG. 5, one tab/band junction 90 and its cooperating components is shown here at an intersection of the tab 80A, voltage sensing conductor 100A, and band 70, as a close-up of a corresponding portion of that shown in FIG. 4. This arrangement is substantially identical to those of other tab/band junctions 90, such that they are mirror images of the intersection of tab 80B, voltages sensing conductor 100B, and band 70. Current load transmitting path 12A includes a main body segment 120 of tab 80A. A node 130 may be defined as a transitional segment of material that interconnects the tab 80A and voltage sensing conductor 100A, which may be arranged or adjacent the tab/band junction 90.

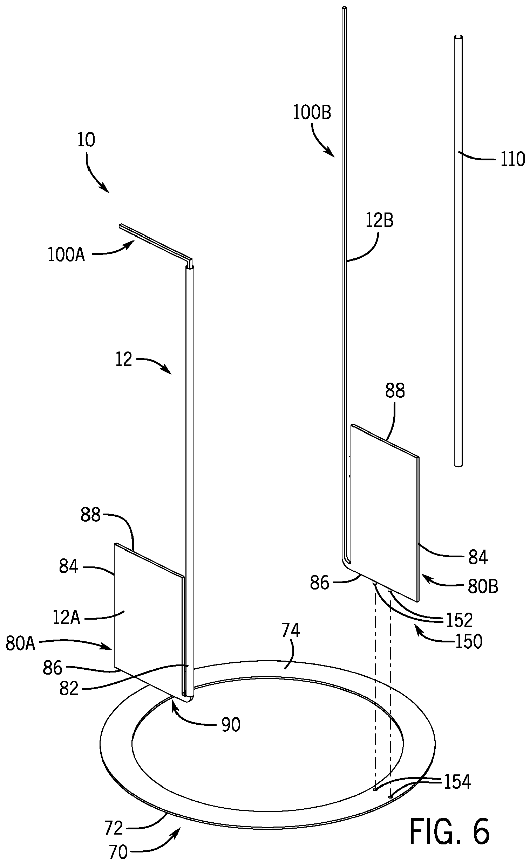

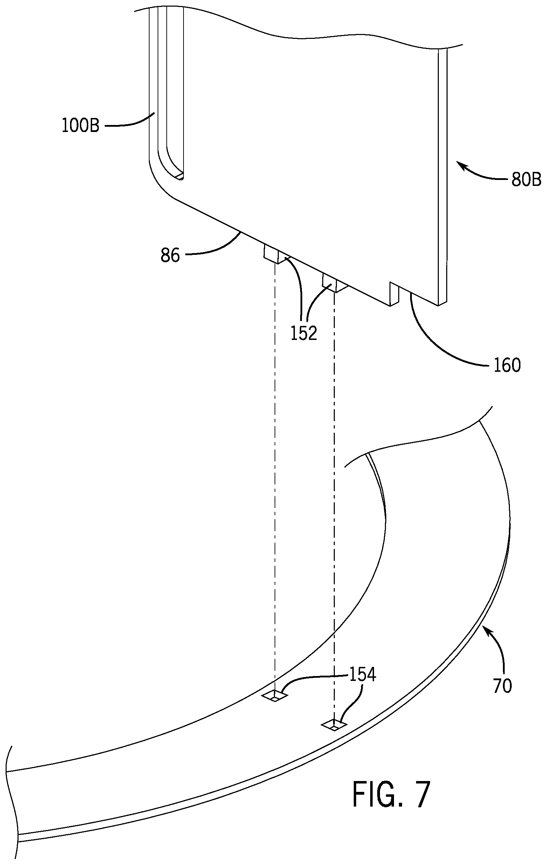

Referring now to FIG. 6, the voltages sensing conductors 100A, 100B and the conductive tabs 80A, 80B may be made from a single piece of sheet material, which is joined to the contour or band 70. The conductive tabs and the band may interconnect by way of cooperating features at a joint. As shown in FIG. 7, the joint may include an interlock arrangement 150 that is at least partially integrated into the bottom end of the tab 80A, 80B as well as the band 70. The interlock arrangement may include cooperating protuberances and receptacles, shown here as pins 152 and pockets 154. Pins 152 extend downwardly from the tab's bottom edge 86, spaced apart from and parallel to each other. Pockets 154 typically extend through the entire thickness of band 70, as through-bores. The pins 152 and pockets 154 have corresponding perimeter shapes, such as each having circular or each having square perimeters to facilitate a snug fit of the pins 152 in the pockets 154 to locate the tabs 80A, 80B in a predefined location and orientation relative to the band 70.

The cooperative mounting or coupling of the respective features of the interlock arrangement 150 facilitates a fit-up procedure during assembly of the heat-seal band 10. Joinder of the tabs 80A, 80B and band 70 at the tab/band junction 90 may be done by way of an autogenous welding procedure that does not require filler material, such as various laser-welding processes that can weld the parent material(s) alone. Furthermore, consistency of positioning the tabs 80A, 80B on the band 70 during assembly by way of the interlock arrangement 150 correspondingly allows for consistent positioning of various features of the tabs 80A, 80B with respect to the band 70, which may be provided for energy flow enhancement for a particular application. In the example shown in FIG. 7, tab 80B includes a notch 160 that defines an angled or step-change in height with respect to the lower edge 86, moving the segment of the lower edge to an offset greater height that of the remainder of lower edge 86.

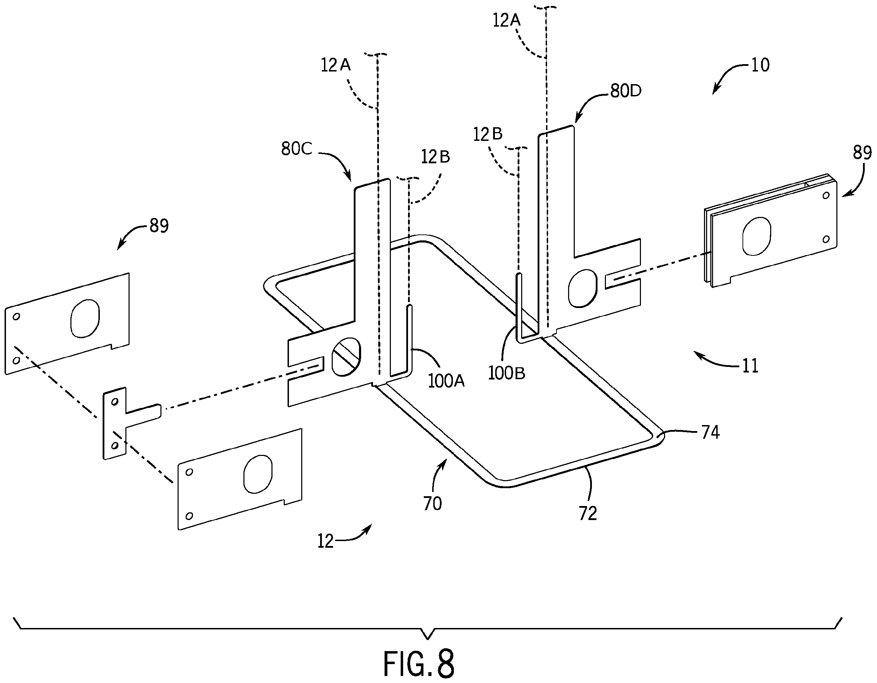

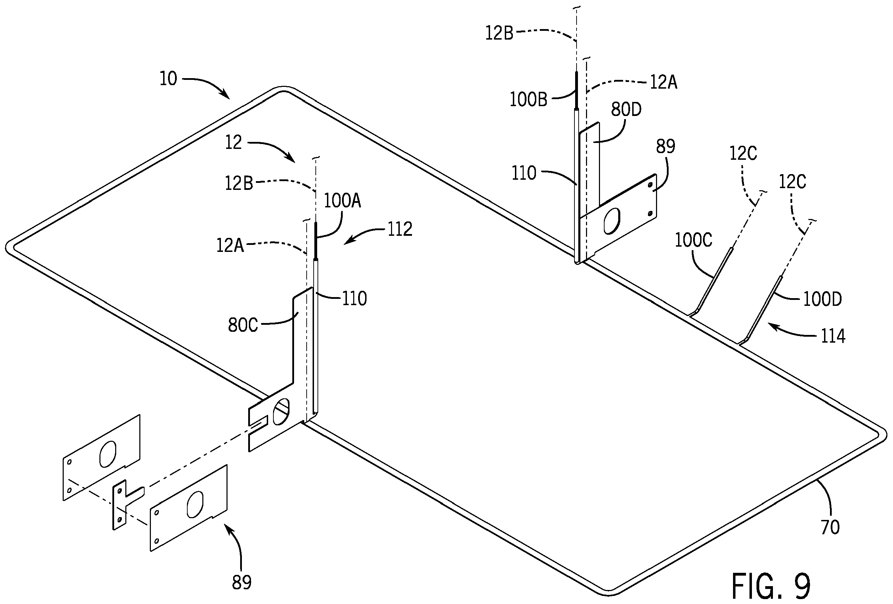

Referring generally to FIGS. 8 and 9, the heat-seal bands 10 shown here differ from that shown in FIG. 3 in the following ways. Compared to the generally linear or rectangular tabs 80A, 80B of FIG. 3, heat-seal band's 10 tabs 80C, 80D shown in FIGS. 8-9 have L-shaped configurations. L-shaped tabs 80C, 80D may implement tab covers 89, shown here configured to receive them in generally sideways directions.

Referring now to FIG. 9 and with background reference to FIG. 1, the multi-electrical-path arrangement 12 is shown with more than one voltage sensing path. In this example, a third electrical path is defined as an additional or third voltage sensing path 12C. This allows the control system 16 (FIG. 1) to rely on signals from more than one set of voltage sensing conductors while controlling the energizing of heat seal band 10 to provide its temperature control. The multiple sets of voltage sensing conductors may be implemented as components of different subsystems of control system 16, such as a primary control system that is used in the active temperature control of heat seal band 10 and a secondary control system which may provide a confirmatory check on the heating performance, such as identifying temperature anomalies at a location(s) of the heat-seal band 10 that is spaced from or as a subset with a location used by the primary control system. Voltage sensing conductors 100A, 100B may define a first set 112 of voltage sensing conductors at or adjacent to the band 70 that are implemented by the control system's 16 primary control system. The primary control system may use signals from the first set 112 of voltage sensing conductors 100A, 100B as part of a determination in which temperature and/or temperatures change can be calculated as a function of a change in resistance, to facilitate the control system's 16 active control of the heat seal band 10. Voltage sensing conductors 100C, 100D may define a second set 114 of voltage sensing conductors at a location that is spaced from the first set 112, shown here extending directly from a portion of band 70. Control system's 16 secondary control system may utilize signals from second set 114 of voltage sensing conductors 100C, 100D in, for example, a passive or confirmatory manner to determine temperature in a similar way at that location and then compare the temperatures at the first and second sets 112, 114. It is understood that, in some implementations, control system 16 may use the first and second sets 112, 114 in the opposite way(s). Accordingly, the control system's 16 primary control system may instead utilize the second set 114 of voltage sensing conductors 100C, 100D for active control of the heat seal band 10 and the secondary control system may utilize the first set 112 of voltage sensing conductors 100A, 100B as a passive-check or in a confirmatory manner to determine temperature. Regardless, comparing calculated temperatures from the first and second sets 112, 114 facilitates identifying potential temperature anomalies that may correspond to nonuniform heating of the heat-seal band 10. This allows control system 16 to control the energization of heat-seal band 10 to take corrective action and/or send an alert to an operator of such condition.

Still referring to FIG. 9, the first and second sets 112, 114 are shown with different spacings between their respective voltage sensing conductors 100A, 100B, and 100C, 100D. Voltage sensing conductors 100A, 100B of the first set 112 are shown on generally opposite sides or segments of band 70, such as approximately equidistant from each other as measured in both directions about the band's 70 periphery as an outside set. Comparatively, the voltage sensing conductors 100C, 100D are shown substantially closer to each other and on the same or a common segment of the band 70, so that their spacing is a minor fraction of the overall perimeter length of band's 70 periphery as an inside set. The voltages sensing conductors 100C, 100D of the second set 114 are shown adjacent to each other and the second set 114, both of which are between the voltage sensing conductors 100A, 100B of the first set 112. This may allow for a localized temperature evaluation as a passive confirmatory "spot check" that can be utilized by control system 16 (FIG. 1) in evaluating temperature uniformity about the band 70. As previously mentioned, in some implementations, the inside set or second set 114 may be used to provide active control based on the corresponding localized temperature evaluation.

Other aspects and characteristics of heat-seal band 10 falling within the scope of the present invention are disclosed in the drawings attached hereto, the disclosure of which is expressly incorporated herein.

Many changes and modifications could be made to the invention without departing from the spirit thereof. The scope of these changes will become apparent from the appended claims.

## Claims

1. A heat-seal band comprising:
a band that is configured to be heated to perform a heat-sealing operation to a workpiece;
a first electrical path configured for transmitting a current load to the band; and
a second electrical path configured for sensing a voltage across the band.

2. The heat-seal band of claim 1, further comprising:
a conductive tab that is connected to the band and defines a corresponding tab to band (tab/band) junction; and wherein:
the first electrical path connects to the tab/band junction by extending through the conductive tab; and
the second electrical path connects to the tab/band junction without extending through the conductive tab.

3. The heat-seal band of claim 2, wherein:
the conductive tab engages a conductive surface of a heat-sealing tool that holds the heat-seal band, and
the conductive surface of the heat-sealing tool is arranged within the first electrical path.

4. The heat-seal band of claim 3, further comprising:
a voltage sensing conductor that is arranged within the second electrical path and is electrically insulated with respect to the heat-sealing tool.

5. The heat-seal band of claim 4, wherein:
the band defines an inner perimeter; and
the voltage sensing conductor is connected to the tab/band junction at a location that is arranged inwardly of the band inner perimeter.

6. The heat-seal band of claim 4, wherein:
the band defines an outer perimeter; and
the voltage sensing conductor is connected to the tab/band junction at a location that is arranged outwardly of the band outer perimeter.

7. The heat-seal band of any of the preceding claims, further comprising:
a third electrical path configured for sensing a voltage across a segment of the band.

8. The heat-seal band of claim 7, wherein:
the second electrical path is defined by a first set of voltage sensing conductors at generally opposite segments of the band; and
the third electrical path is defined by a second set of voltage sensing conductors at a common segment of the band.

9. The heat-seal band of claim 8, wherein:
the voltage sensing conductors of the first set of voltage sensing conductors are spaced further from each other than the voltage sensing conductors of the second set.

10. A heat-seal band comprising:
a band that is configured to be heated to perform a heat-sealing operation to a workpiece;
a conductive tab that is connected to the band and defines a corresponding tab to band (tab/band) junction;
a joint defined by a cooperating protuberance and receptacle at the tab/band junction for locating the band and conductive tab with respect to each other.

11. The heat-seal band of claim 10, wherein:
the joint further includes a weld defined by a welded joinder of materials of the conductive tab and the band at the tab/band junction.

12. A method of forming the joint of claim 11, including:
performing a fit-up procedure in which the protuberance is inserted into the receptable and at least a portion of a bottom edge of the conductive tab abuts an upper surface of the band; and
welding the conductive tab and band to each other.
